# EUROPÄISCHE PATENTANMELDUNG

(11) **EP 1 922 919 A2**
(43) Veröffentlichungstag der Anmeldung: **21.05.2008**
(21) Anmeldenummer: 07022075.1
(22) Anmeldetag: 14.11.2007
(51) Int. Cl.: A01K 1/00

(54) **Flächiges Bauelement aus kunststoff zur Errichtung von Wänden**

(30) Priorität: 14.11.2006 DE 202006017329 U
(71) Anmelder: Aufenacker, Rudolf Alexander, 46419 Isselburg (DE)
(72) Erfinder: Aufenacker, Rudolf Alexander, 46419 Isselburg (DE)
(74) Vertreter: DR. STARK & PARTNER

(57) **Zusammenfassung**

Die Erfindung betrifft ein flächiges Bauelement aus Kunststoff zur Errichtung von Wänden, insbesondere von Zwischenwänden (12) in Tierställen, mit einer rechteckigen Form, die durch zwei zueinander parallele Seitenflächen (1) und vier umlaufenden Kantenfläche (2) gebildet ist, wobei das Bauelement zumindest teilweise einen Hohlraum aufweist und das Bauelement wasserdicht verschlossen ist. Um ein Bauelement anzugeben, das schneller montierbar ist und die Lagerhaltung vereinfacht wird, sollen an zumindest einer Kantenfläche (2) die beiden Kanten, die sich zwischen der jeweiligen Seitenfläche (1) und der Kantenfläche (2) befinden, jeweils entsprechend der generellen Erstreckung der Ebene der Seitenfläche (2) einen sich über die betreffende Kantenfläche (1) heraus erstreckenden Abschnitt (4) aufweisen, wobei die beiden Abschnitte (4) zusammen eine Nut (5) bilden, und soll an der gegenüberliegenden Kante des Bauelementes ein in die Nut (5) einführbarer Einführbereich (6) vorgesehen sein, wobei die Außenbreite des Einführbereiches (6) zumindest um die Materialstärke der Abschnitte (4) geringer ausgebildet ist.

## Beschreibung

Die Erfindung betrifft ein flächiges Bauelement aus Kunststoff zur Errichtung von Wänden, insbesondere von Zwischenwänden in Tierställen, mit einer rechteckigen Form, die durch zwei zueinander parallele Seitenflächen und vier umlaufenden Kantenfläche gebildet ist, wobei das Bauelement zumindest teilweise einen Hohlraum aufweist und das Bauelement wasserdicht verschlossen ist.

Derartige Bauelemente werden insbesondere zur Errichtung von Zwischenwänden in Ställen eingesetzt. Üblicherweise wird hierzu auf dem Boden des Tierstalls eine U-förmig ausgebildete Schiene montiert, in die die Bauelemente mit ihrer unteren Kante eingesetzt werden. Zur Verbindung zweier benachbarter Bauelemente wird dann eine im Querschnitt gesehen H-förmig ausgebildete Verbindungsschiene eingesetzt, wobei in diese Verbindungsschiene die beiden benachbarten Bauelemente von beiden Seiten eingeschoben werden.

Als Nachteil erweist sich insbesondere die Lagerhaltung, da zum einen die Bauelemente als auch die Verbindungsschienen in unterschiedlichen Farben bevorratet werden müssen. Zum anderen müssen auch die Verbindungsschienen an die bauseitigen Gegebenheiten angepasst werden, was mit einem nicht unbeachtlichen Montageaufwand verbunden ist.

Aufgabe der Erfindung ist es, die vorgenannten Nachteile zu vermeiden und ein Bauelement anzugeben, das schneller montierbar ist und die Lagerhaltung vereinfacht wird.

Diese Aufgabe wird dadurch gelöst, dass an zumindest einer Kantenfläche die beiden Kanten, die sich zwischen der jeweiligen Seitenfläche und der Kantenfläche befinden, jeweils entsprechend der generellen Erstreckung der Ebene der Seitenfläche einen sich über die betreffende Kantenfläche heraus erstreckenden Abschnitt aufweisen, wobei die beiden Abschnitte zusammen eine Nut bilden, und dass an der gegenüberliegenden Kante des Bauelementes ein in die Nut einführbarer Einführbereich vorgesehen ist, wobei die Außenbreite des Einführbereiches zumindest um die Materialstärke der Abschnitte geringer ausgebildet ist. Die verschlossene Ausbildung des Bauelementes dient u.a. zum Schutz vor Insektennestern und vor Eindringen von allgemeinen Verschmutzungen. Durch die erfindungsgemäße Ausgestaltung des Bauelementes wird der Montageaufwand reduziert, da benachbarte Bauelemente lediglich ineinander eingesteckt werden müssen. Es bedarf keiner separaten Anpassung der bisher üblichen Verbindungsschienen, die zudem noch separat in der entsprechenden Farbe bevorratet werden mussten.

Damit können auch auf eine einfache und schnelle Art Trennwände aus übereinander angeordneter Reihen an Bauelementen errichtet werden, wobei die Farben der Bauelemente der Reihen voneinander abweichen. Denn bisher wurden über alle Reihen durchgehende Verbindungsschienen eingesetzt, da der Stoßbereich zweier Verbindungsschienen übereinander angeordneter Reihen mit einem vertretbaren Montageaufwand nicht mit der gewünschten Genauigkeit realisierbar war.

Die Außenfläche eines jeden Abschnittes mit der jeweils angrenzenden Seitenfläche kann in einer Ebene liegen und die Außenbreite des Einführbereiches kann geringer als die Außenbreite des Bauelementes im Bereich der Seitenflächen sein. Eine solche Ausführungsform ermöglicht die Herstellung einer aus mehreren Bauelementen bestehenden Wand mit ebenen Seitenflächen, da die Außenbreite des Einführbereiches geringer ist als im Bereich der Seitenflächen.

Alternativ kann der Einführbereich mit den beiden angrenzenden Seitenflächen in einer Ebene liegen und jeder Abschnitt kann gegenüber der jeweils angrenzenden Seitenfläche vorstehend ausgebildet sein.

Die Abschnitte können im Wesentlichen parallel zueinander ausgerichtet sein.

Alternativ können die Abschnitte zu ihrem jeweiligen freien Ende hin aufeinander zulaufend ausgerichtet sein. Zum Einführen des Einführbereiches müssen die beiden Abschnitte gegen ihre Rückstellkraft nach außen hin ausgelenkt werden, so dass im eingeführten Zustand von den Abschnitten eine Vorspannung auf den Einführbereich ausgeübt wird. Hierdurch wird die Verbindung zweier Bauelemente verstärkt.

Um das Einführen des Einführbereiches zu erleichtern, kann sich die Außenbreite des Einführbereiches zu dem freien Ende des Einführbereiches hin verringern. Denkbar ist beispielsweise, dass die beiden parallel zu den Abschnitten ausgerichteten Kanten des Einführbereiches abgeschrägt sind.

Vorzugsweise kann das Bauelement aus zwei miteinander verbundenen, insbesondere durch Verschweißen oder Verkleben miteinander verbundenen, Bauelementehälften bestehen.

Im Folgenden werden in den Zeichnungen dargestellte Ausführungsbeispiele der Erfindung erläutert. Es zeigen:
- Fig. 1: eine schräge Draufsicht auf ein erfindungsgemäßes Bauelement,
- Fig. 2: eine schräge Draufsicht auf zwei im Abstand zueinander angeordneten Bauelementehälften,
- Fig. 3: einen Schnitt durch einen Teil zweier noch nicht ganz eingeführter Bauelemente,
- Fig. 4-7: eine Abfolge einer Montage von Bauelementen zur Errichtung einer Wand,
- Fig. 8: eine schräge Draufsicht auf eine mögliche Ausführungsform eines Tierstalls und
- Fig. 9: eine alternative Ausgestaltung zu dem Gegenstand nach Fig. 3.

In allen Figuren werden für gleiche bzw. gleichartige Bauteile übereinstimmende Bezugszeichen verwendet.

In den Figuren ist ein flächiges Bauelement aus Kunststoff dargestellt, das eine rechteckige Form aufweist, die durch zwei zueinander parallele Seitenflächen 1 und vier umlaufende Kantenflächen 2 gebildet ist.

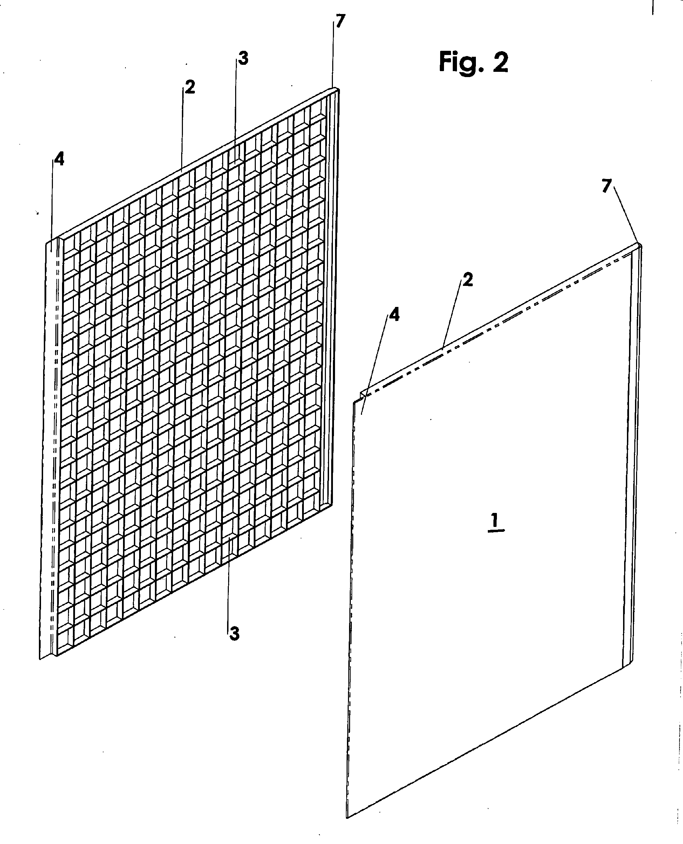

Wie insbesondere aus Fig. 2 hervorgeht, besteht jedes Bauelement aus zwei miteinander verbundenen Bauelementenhälften, die beispielsweise miteinander verschweißt sind. Zur Erhöhung der Stabilität sind innerhalb jeder Bauelementenhälfte Verstärkungsrippen 3 vorgesehen, wobei vorzugsweise die Verstärkungsrippen 3 beider Bauelementenhälften so angeordnet sind, dass sie sich im verbundenen Zustand berühren.

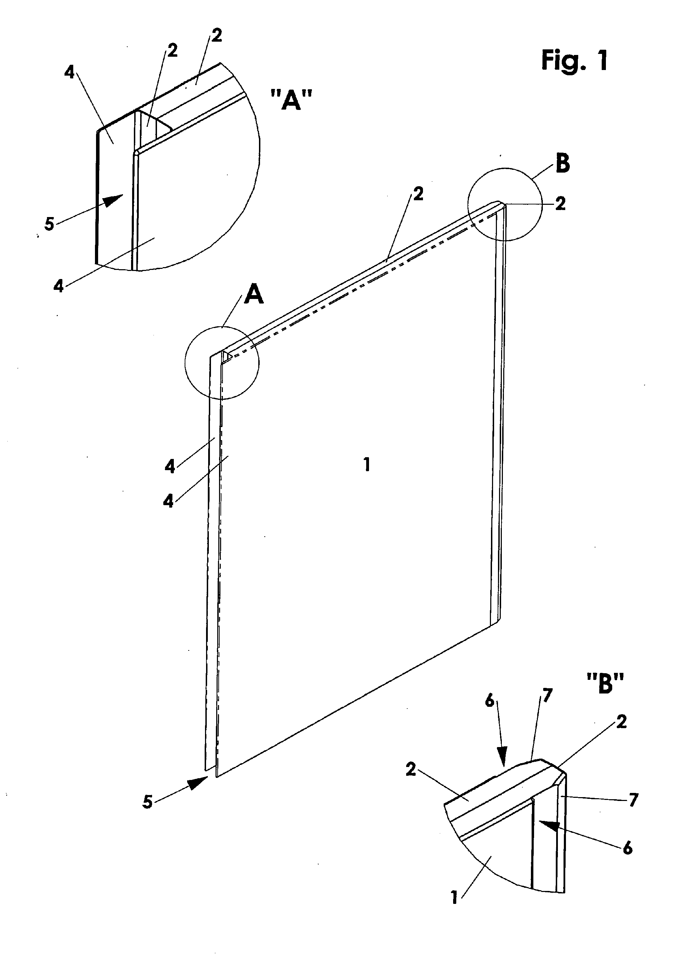

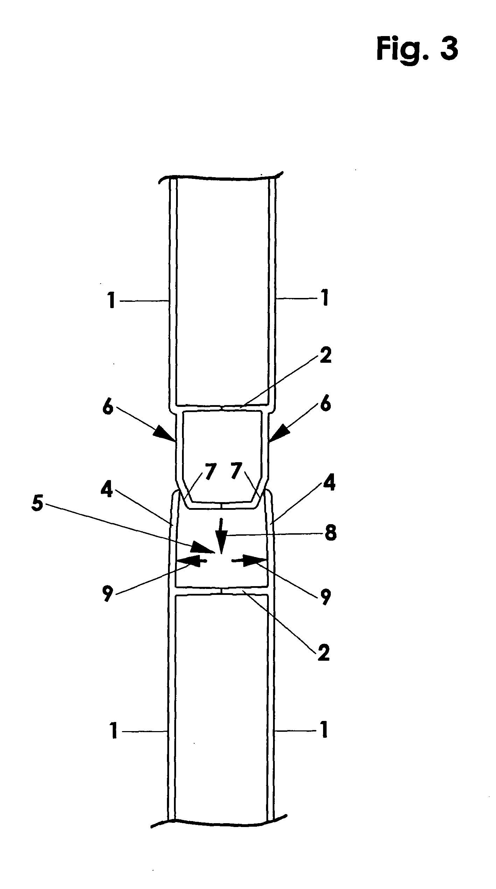

Wie insbesondere aus den Fig. 1 und 3 hervorgeht, weisen die beiden Kanten einer Kantenfläche 2, die sich zwischen der jeweiligen Seitenfläche 1 und der Kantenfläche 2 befinden, zwei Abschnitte 4 auf, die sich jeweils entsprechend der generellen Erstreckung der Ebene der Seitenfläche 1 über die betreffende Kantenfläche 2 heraus erstrecken. Beide Abschnitte 4 bilden eine Nut 5.

An der gegenüberliegenden Kante des Bauelementes ist ein in die Nut 5 einführbarer Einführbereich 6 vorgesehen, wobei die Außenbreite des Einführbereiches 6 zumindest um die Materialstärke der Abschnitte 4 geringer ausgebildet ist.

Bei der Ausführungsform beispielsweise nach Fig. 3 ist die Außenfläche eines jeden Abschnittes 4 mit der jeweils angrenzenden Seitenfläche 1 in einer Ebene und die Außenbreite des Einführbereiches 6 ist geringer als die Außenbreites des Bauelementes im Bereich der Seitenflächen 1. Damit haben benachbarte Bauelemente im zusammengesteckten Zustand eine ebene Außenfläche.

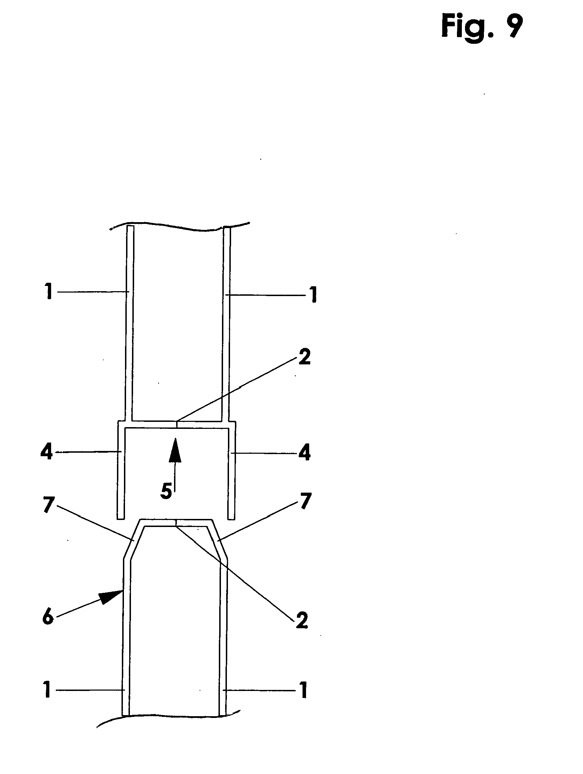

In Fig. 9 ist eine Ausführungsform dargestellt, bei der der Einführbereich 6 mit den beiden angrenzenden Seitenflächen 1 in einer Ebene liegt und jeder Abschnitt 4 gegenüber der jeweils angrenzenden Seitenfläche 1 vorstehend ausgebildet ist.

Zum besseren Einführen verringert sich die Außenbreite des Einführbereiches 6 zu dem freien Ende des Einführbereichs 6 hin. Vorliegend sind die parallel sich zu den Abschnitten 4 des benachbarten Bauelementes erstreckenden Kanten 7 des Einführbereiches 6 abgeschrägt ausgebildet.

Wie insbesondere aus Fig. 3 ersichtlich, sind die Abschnitte 4 zu dem jeweiligen freien Ende hin aufeinander zulaufend ausgerichtet. Damit werden die Abschnitte 4 beim Einführen des Einführbereich eines benachbarten Bauelementes in Richtung (Pfeil 8) gegen ihre Rückstellkraft nach außen hin (Pfeil 9) verlagert, so dass im eingeführten Zustand die Abschnitte 4 eine Kraft auf den Einführbereich 6 auswirken.

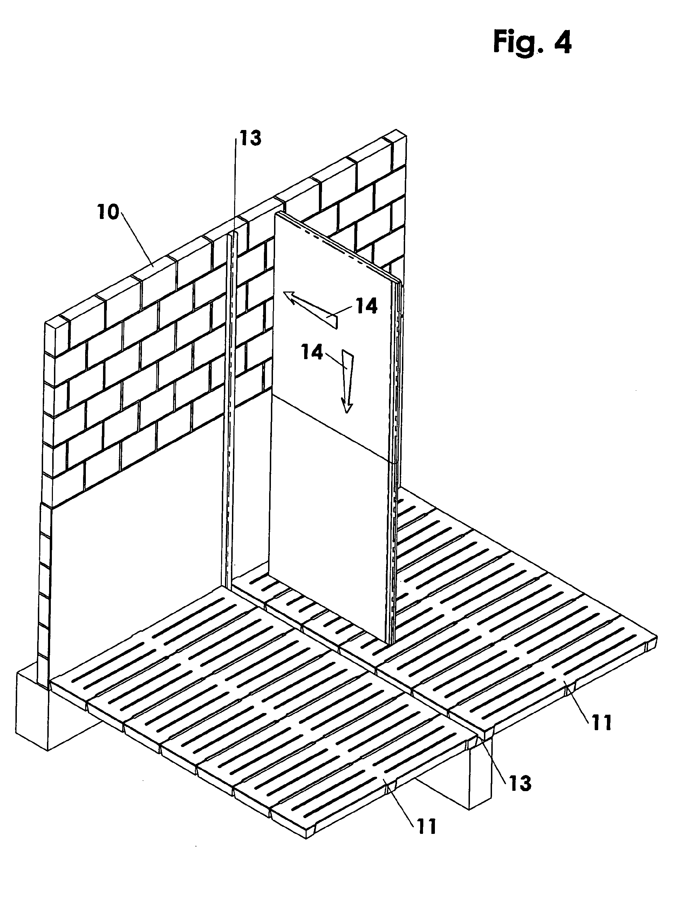

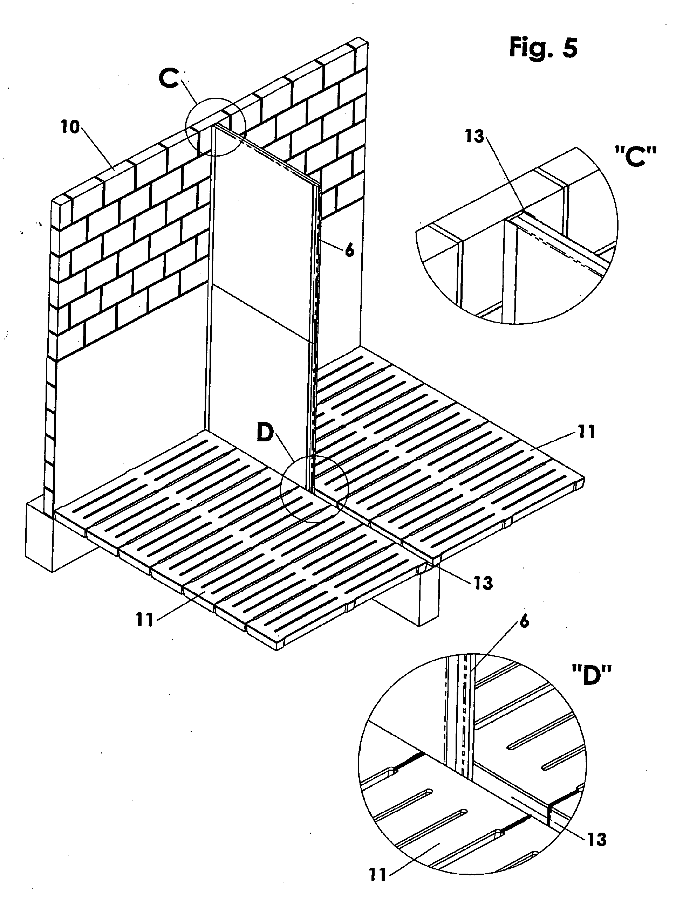

In den Fig. 4 bis 7 ist beispielhaft eine Montage dargestellt. Im Hintergrund ist eine Mauer 10 eines nicht näher dargestellten Stalls angedeutet. Als Boden sind Gitter 11 vorgesehen. Im Bereich einer zu montierenden Zwischenwand 12 ist sowohl an der Mauer 10 als auch im Boden ein U-förmig ausgebildete Schiene 13 vorgesehen, in das in dem dargestellten Ausführungsbeispiel zwei übereinander angeordnete Bauelemente in Richtung der dargestellten Pfeile 14 eingeführt werden. In Fig. 5 ist die Montageposition der beiden Bauelemente dargestellt.

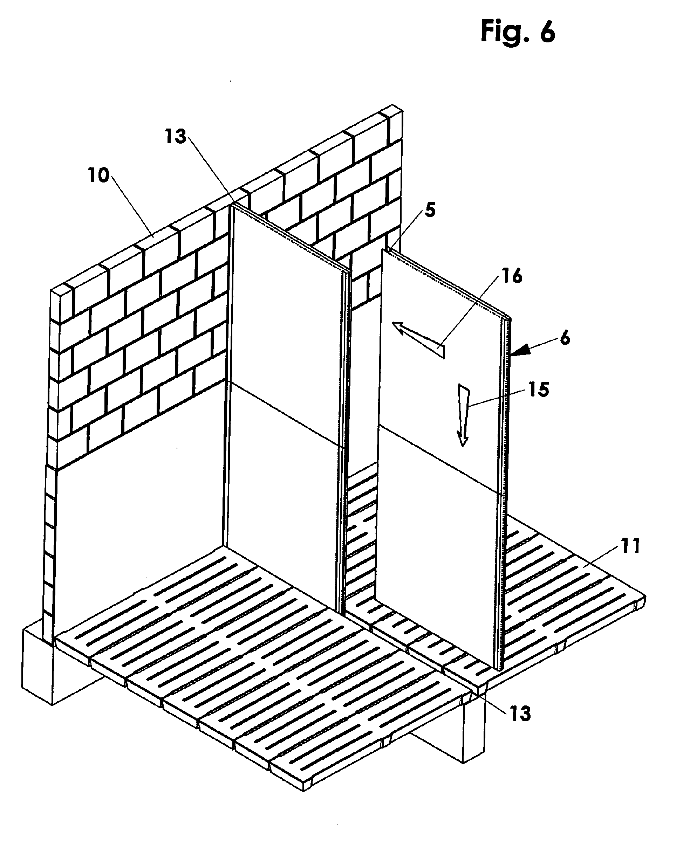

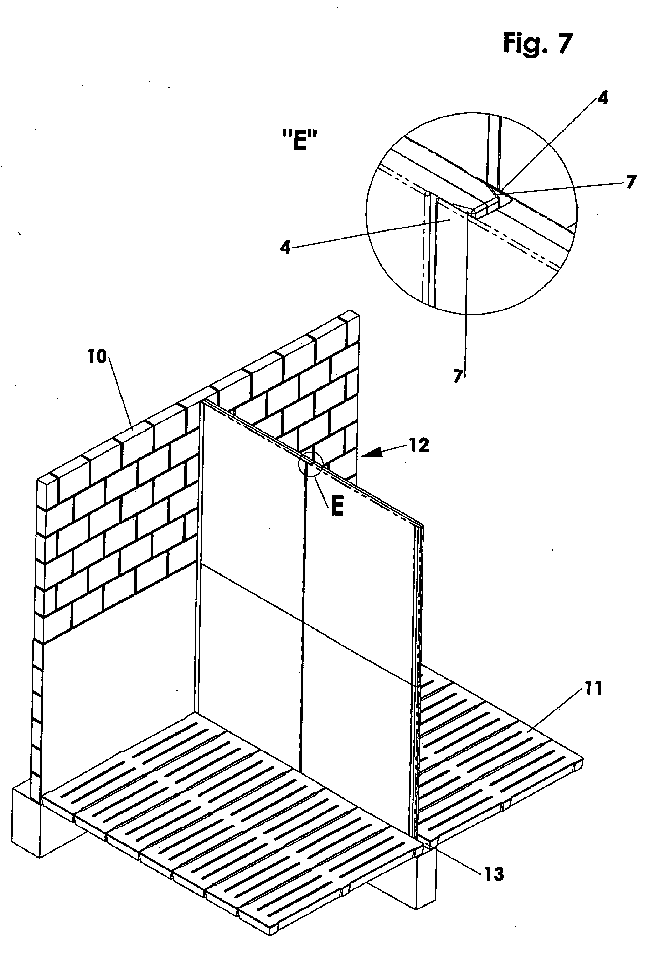

Die nächsten beiden Bauelemente werden, wie in Fig. 6 dargestellt, einerseits in Richtung des Pfeils 15 in die Schiene 13 im Boden eingeschoben und andererseits durch Verschieben in Richtung des Pfeils 16 mit den beiden bereits montierten Bauelementen verbunden. Die endgültige Montageposition der beiden zuletzt montierten Bauelemente ist in Fig. 7 dargestellt.

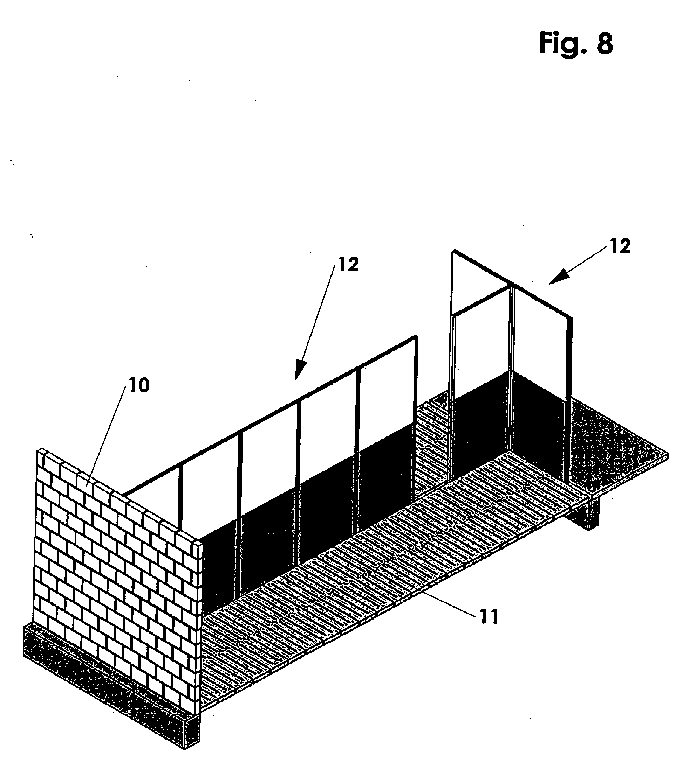

In Fig. 8 ist beispielhaft eine Zwischenwand 12 dargestellt, bei der zwei Reihen an Bauelementen anders farbiger Ausgestaltung übereinander angeordnet sind. So sind hier die Bauelemente der oberen Reihe hell ausgestaltet, während die untere Reihe eine dunklere Farbe aufweist. Durch die erfindungsgemäßen Bauelemente erhält die Zwischenwand 12 ein ansprechenderes Erscheinungsbild, da beide Reihen an Bauelementen eine einheitliche Farbgestaltung aufweisen. Dies war bei herkömmlichen Bauelementen aufgrund der Verwendung von sich über beide Reihen erstreckenden durchgehenden Verbindungsschienen nicht möglich. Abhängig von der Auswahl der Farbe der Verbindungsschiene fiel diese entweder im Bereich der oberen Reihe oder im Bereich der unteren Reihe optisch auf.

Selbstverständlich ist es auch möglich, dass die Bauelemente auch im Bereich der oberen und der unteren Kantenfläche 2 eine erfindungsgemäße Ausgestaltung aufweisen.

## Patentansprüche

1. Flächiges Bauelement aus Kunststoff zur Errichtung von Wänden, insbesondere von Zwischenwänden (12) in Tierställen, mit einer rechteckigen Form, die durch zwei zueinander parallele Seitenflächen (1) und vier umlaufende Kantenflächen (2) gebildet ist, wobei das Bauelement zumindest teilweise einen Hohlraum aufweist und das Bauelement wasserdicht verschlossen ist, **dadurch gekennzeichnet, dass** an zumindest einer Kantenfläche (2) die beiden Kanten, die sich zwischen der jeweiligen Seitenfläche (1) und der Kantenfläche (2) befinden, jeweils entsprechend der generellen Erstreckung der Ebene der Seitenfläche (1) einen sich über die betreffende Kantenfläche (2) heraus erstreckenden Abschnitt (4) aufweisen, wobei die beiden Abschnitte (4) zusammen eine Nut (5) bilden, und dass an der gegenüberliegenden Kante des Bauelementes ein in die Nut (5) einführbarer Einführbereich (6) vorgesehen ist, wobei die Außenbreite des Einführbereiches (6) zumindest um die Materialstärke der Abschnitte (4) geringer ausgebildet ist.

2. Flächiges Bauelement nach dem vorhergehenden Anspruch, **dadurch gekennzeichnet, dass** die Außenfläche eines jeden Abschnittes (4) mit der jeweils angrenzenden Seitenfläche (1) in einer Ebene liegt und die Außenbreite des Einführbereiches (6) geringer als die Außenbreite des Bauelementes im Bereich der Seitenflächen (1) ist.

3. Flächiges Bauelement nach Anspruch 1, **dadurch gekennzeichnet, dass** der Einführbereich (6) mit den beiden angrenzenden Seitenflächen (1) in einer Ebene liegt und jeder Abschnitt (4) gegenüber der jeweils angrenzenden Seitenfläche (1) vorstehend ausgebildet ist.

4. Flächiges Bauelement nach einem der vorhergehenden Ansprüche, **dadurch gekennzeichnet, dass** die Abschnitte (4) im wesentlichen parallel zueinander ausgerichtet sind.

5. Flächiges Bauelement nach einem der Ansprüche 1 bis 3, **dadurch gekennzeichnet, dass** die Abschnitte (4) zu ihrem jeweiligen freien Ende hin aufeinander zulaufend ausgerichtet sind.

6. Flächiges Bauelement nach einem der vorhergehenden Ansprüche, **dadurch gekennzeichnet, dass** sich die Außenbreite des Einführbereiches (6) zu dem freien Ende des Einführbereiches (6) hin verringert.

7. Flächiges Bauelement nach einem der vorhergehenden Ansprüche, **dadurch gekennzeichnet, dass** das Bauelement aus zwei miteinander verbundenen, insbesondere durch Verschweißen oder Verkleben miteinander verbundenen, Bauelementehälften besteht.
